# EUROPEAN PATENT SPECIFICATION

(11) **EP 0 691 291 B1**
(45) Date of publication and mention of the grant of the patent: **17.03.1999**
(21) Application number: 95109916.7
(22) Date of filing: 26.06.1995
(51) Int. Cl.: B65G 49/06, B65G 61/00

(54) **Automatic handling device, particularly for slabs of marble, granite, and other stone materials**
Automatische Handhabungseinrichtung, insbesondere für Platten aus Marmor, Granit und anderem Gestein
Installation de manipulation automatique, en particulier pour plaques de marbre, granit et autres matériaux

(30) Priority: 06.07.1994 IT VI940103
(43) Date of publication of application: 10.01.1996
(73) Proprietor: SIMEC S.P.A., I-31030 Castello di Godego (Treviso) (IT)
(72) Inventor: Stangherlin, Ampelio, I-31030 Castello di Godego, (Treviso) (IT); Stocco, Romeo, I-31033 Castelfranco Veneto, (Treviso) (IT)
(74) Representative: Wagner, Karl H., Dipl.-Ing.

(56) References cited:
- DE-A- 2 006 461
- DE-B- 1 293 995
- FR-E- 92 840
- US-A- 2 022 242

## Description

The present invention relates to an automatic handling device, particularly for loading, unloading, and overturning slabs of marble, granite, and other stone materials.

Devices of the above mentioned type are generally arranged at the ends of lines for facing, polishing, and cutting slabs, or can be inserted between the various units for the individual treatments.

Conventional handling devices are essentially constituted by movable arms or trucks that are usually equipped with suckers that are placed in contact with the surface of the slabs and in which vacuum is produced to apply suction, consequently gripping the work pieces.

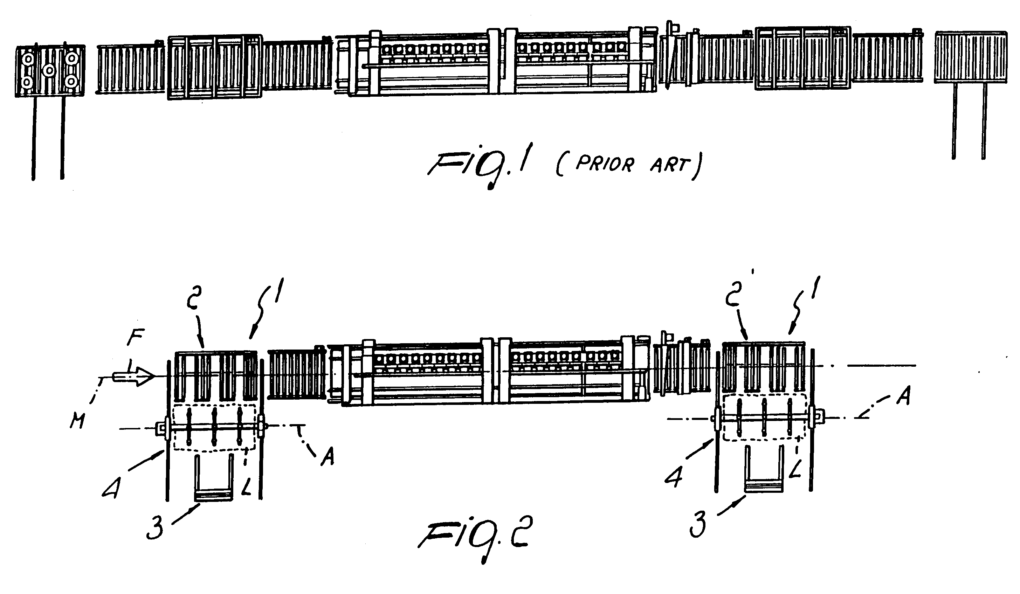

A particular requirement of this field of technology is to face the slabs on opposite sides, in order to provide so-called "open-speckle" or "mirror-finish" ornamental patterns, obtained by arranging side by side slabs with alternately polished visible faces. Devices have been studied for this purpose that allow to turn the slabs over through 180°, allowing to process opposite sides. These devices are generally constituted by roller conveyors that are rotatably supported about horizontal fixed axes and are provided with slab locking devices. These devices are generally inserted in the roller conveyors that are located ahead and after the polishing machine, as shown schematically in the layout of Figure 1. The greatest drawbacks of these known devices are low flexibility and large bulk in a longitudinal direction.

New kinds of handling device have recently been provided that allow to perform, with a single fixture, both the loading-unloading function and the slab overturning function. These handling devices are substantially constituted by a single arm that is provided with suckers and is mounted in a cantilevered manner on a post that can move horizontally along guides that are anchored to the ground. The arm can move vertically along the post and can rotate about its own longitudinal axis. The device is associated with a particular supporting roller conveyor that is provided with a central compartment for accommodating the arm in a position that is rotated through 180°, so as to deposit the slab by supporting it from below. The arm normally acts as loading-unloading device; when it is necessary to turn the slab over, the arm picks it up from a storage unit that is arranged ahead, turns the slab over by rotating through 180° about its own axis, then deposits it on the parking roller conveyor that is arranged after it and remains inside the central compartment of the conveyor for the time required by the slab to move along the processing line.

From US-A-2 022 242 a device is known for turning plate glass, comprising all the features mentioned in the preamble of the independent claim 1. In this known device the means for lifting the plate glass is in a fixed position and is adapted to transfer the plates only by pivoting motion.

From FR-A-1 438 399 a device is known for handling large plates of different materials having a pivoting table for supporting the plates which is mounted on a rolling or sliding carriage and which is suitable to lift a plate and to turn it to deposit it on a roller conveyor. The pivoting table can only rotate about an horizontal shaft and has no means for moving along a vertical direction.

A drawback of these known devices is constituted by the idle time between the deposition of the slab on the roller conveyor bed and its transfer downstream. During this period the arm is in fact "trapped" inside the compartment of the roller conveyor and cannot be used to go and pick up the next slab.

This idle time considerably reduces the productivity of the plant, especially if it is provided with a high-speed facing line.

Another drawback of these known devices is their low speed, which is caused by the considerable inertia of the moving parts, which must be sized adequately to give the necessary strength and reliability to the device, especially at the arm connection region.

Another drawback is the high manufacturing cost.

The aim of the present invention is to eliminate the drawbacks described above by providing a handling device that offers a higher functionality.

A further aim of the invention is to provide a reliable device.

Still a further aim of the invention is to provide a faster device.

Another aim of the invention is to provide a smaller device.

A further aim of the invention is to provide a device having a low cost.

This aim, as well as objects that will become apparent hereinafter, are achieved by an automatic handling device, particularly for slabs of marble, granite, and other stone materials, as claimed in the accompanying claims. The transfer unit preferably includes a portal-shaped structure that can move along first transverse guiding devices that are anchored to the ground and run between the parking unit and the accumulation unit.

The portal-shaped structure is formed by a longitudinal beam that is substantially parallel to the centerline of the processing line and is supported, at its ends, by two substantially vertical posts that can slide along the first transverse guiding devices.

The grip devices can be constituted by multiple transverse arms that are anchored to the longitudinal beam in longitudinally offset positions and are provided with suckers that are connected to external suction devices.

The parking unit includes a frame that supports, in a cantilevered manner, a series of transverse rollers or groups of rollers that are mutually offset along the slab advancement direction so as to form intermediate open spaces for the lateral insertion of the transverse arms. The frame has a lower longitudinal compartment that allows to accommodate the grip devices, avoiding interference with the longitudinal beam during the lateral insertion of the transverse arms.

The handling device according to the invention offers the advantage that the transfer unit can move horizontally: and the beam can move vertically at right angles to its own axis to transfer the slabs from the parking unit to the accumulation unit and vice versa, while keeping its suckers active on the upper face or on the lower face of the slabs.

Accordingly, the idle times that are typical of handling devices of the known art and occur between the deposition of the slabs on the parking unit and the disengagement of the parking unit to be able to remove the grip devices are thus eliminated. This leads to a greater slab feeding capacity, which is indispensable for high-speed lines.

Furthermore, by virtue of the particular portal-shaped structure, the device is smaller and lighter than prior devices that have a cantilevered arm, and thus allows a considerable increase in the processing speed.

Further characteristics and advantages of the invention will become apparent from the following detailed description of a preferred but not exclusive embodiment of the handling device according to the invention, illustrated by way of non-limitative example in the accompanying drawings, wherein:
Figure 1 is a plan view of a prior art overturning device inserted in a conventional facing line;
Figure 2 is a schematic top view of the facing line of Figure 1, in which two automatic handling devices, according to the invention, are included ahead and after the line;

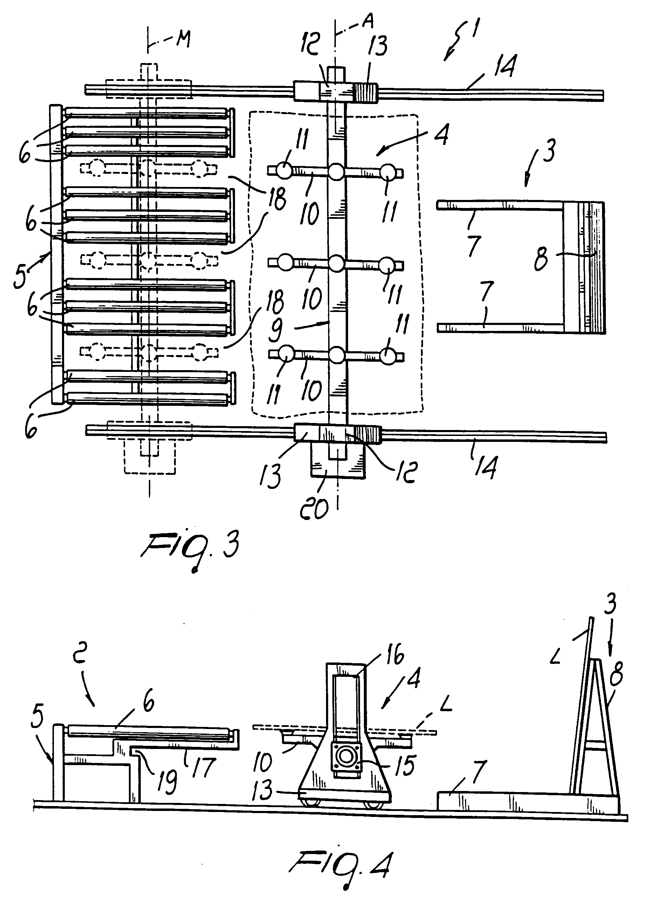

Figure 3 is an enlarged top view of a handling device of Figure 2;

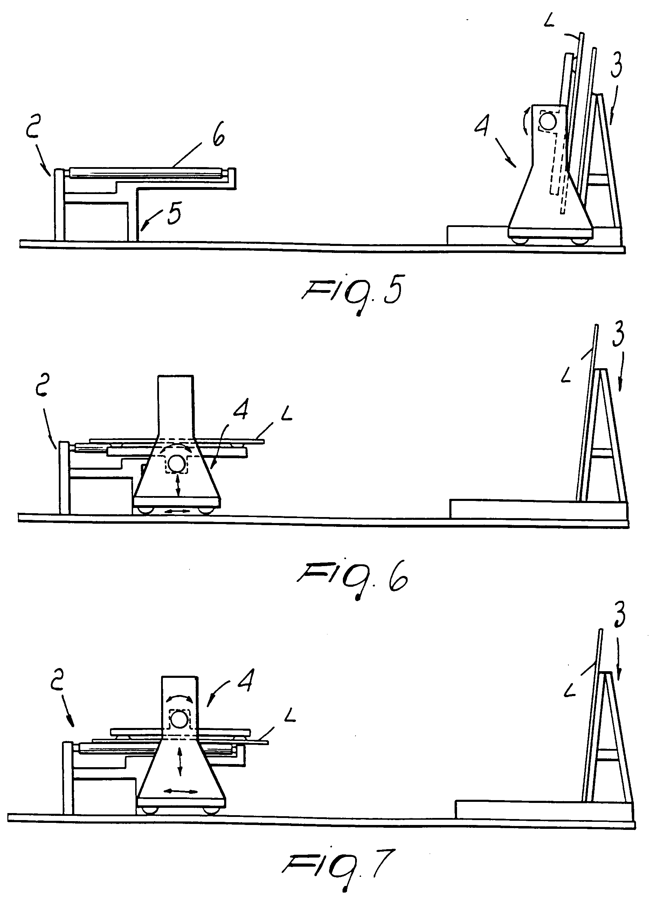

Figure 4 is a side view of the handling device of Figure 3;
Figures 5 to 7 are front views of the handling device of Figure 3 in three successive operating steps.

With reference to the above figures, a handling device according to the invention, generally designated by the reference numeral 1, can be arranged both ahead and after a line for processing slabs L of marble, granite, and other stone materials, to perform the loading-unloading and overturning of the slabs to be processed or of the slabs that have already been processed.

Since the devices arranged at the ends of the line in Figure 2 are identical, only one of them is described hereinafter.

The device is generally formed by a parking unit 2, an accumulation unit 3, and a slab transfer unit 4.

In particular, the parking unit 2 is constituted by a roller conveyor for supporting the slabs L, with a centerline M that approximately coincides with the centerline of the processing line with which it is associated. The parking unit is essentially constituted by a frame 5 made of metal profiled members that is anchored to the ground. A series of steel rollers 6 is mounted on the frame so that the rollers can rotate about axes that are substantially horizontal and lie at right angles to the slab advancement direction F.

The accumulation unit 3 can be constituted by a trestle structure, generally made of steel profiles, that forms a central support 7 with inclined shoulders that is fixed to two horizontal cross-members 8 that are anchored to the ground in a position to the side of the parking unit 2.

The minimum distance D between the parking unit 2 and the accumulation unit must be sufficient to allow the rotation of the slabs L and must therefore be at least equal to their maximum width.

The transfer unit 4 includes a beam 9 with a longitudinal axis A that is substantially horizontal and parallel to the centerline M of the parking unit 2. Grip devices are anchored to the beam 9 and are constituted by multiple transverse arms 10 that lie substantially at right angles to the longitudinal axis A of the beam 9. Each arm is provided with at least two suckers 11 or similar devices, adapted to act on the surface of the slabs to be handled and connected by pipes and controlled valves to an external vacuum source. The vacuum source is not shown in the drawings being within the skill of any technician in the field.

According to the invention, the grip devices are adapted to be inserted laterally in the parking unit 2, transversely with respect to the slab advancement direction, with the suckers directed upward, respectively downward, without interfering with the frame of the parking unit.

For this purpose, the transfer unit 4 is provided with a substantially portal-shaped structure that is constituted by the longitudinal beam 9, supported by two vertical posts 12 that are in turn mounted on trucks 13 that can slide along rails 14 that are anchored to the ground.

The beam 9 is mounted, by means of rotatable pivots, on end supports 15 that can in turn slide vertically along guides 16 that are fixed to the posts 12.

In this manner, the beam 9, with the transverse arms 10 and the suckers 11, can move both horizontally and vertically, at right angles to the slab advancement direction F, toward or away from the parking unit 2 equipped with rollers.

Conveniently, the axes of the rollers 6 of the parking unit 2 are mounted in a cantilevered manner on the frame 5 by means of brackets 17 and are longitudinally offset, or arranged in spaced groups, so as to leave, on the side directed towards the transfer unit, open spaces 18 for the free passage of the arms 10 with the corresponding suckers 11.

Furthermore, the frame 5 of the parking unit 2 has a longitudinal space 19 in the region below the rollers, such as to allow the beam 9 to move freely towards the centerline of the unit without interfering with the profiled members of the frame.

In other words, the parking unit 2 is structured so as to allow the insertion of the grip devices of the transfer unit, which are constituted by the transverse arms 10 and by the suckers 11 rigidly coupled to the beam 9, in the laterally open spaces 18 of the parking unit. Once the slab has been inserted laterally, the beam 9 can be lowered by the amount required to deposit the slab gently on the rollers 6.

Electric, hydraulic, pneumatic, or mixed actuation devices, not illustrated in the drawings, are provided. They act respectively on the trucks 13 to move the portal-shaped structure along the rails 14, on the sliding supports 15 to move them vertically with respect to the posts 12, on the end pivots of the beam 9 to cause its rotation about its own longitudinal axis, and on the rollers 6 of the roller-equipped unit 2 to actuate them and thus cause the continuous advancement of the slabs L.

For each moving part there are sensor devices, for example encoders, photocells, limit switches, not shown in the drawings, to detect the position and/or speed of these parts and optionally of the slab.

The signals generated by these sensors are sent, over appropriate electric lines, to a control unit 20, for example of the PLC programmable type, that supervises the activation of the actuation devices and of the pneumatic supply lines of the suckers 11.

During use, the slabs are initially rested on the trestle 7 of the accumulation unit 3 and are all orientated in the same direction. A first slab is picked up by the beam 9 of the transfer unit 4, is orientated horizontally, and is moved towards the rollers 6, keeping the suckers 11 in contact with the upper surface of the slab. During this step, the beam 9 is kept at such a level that the lower face of the slab is slightly raised by a few millimeters with respect to the upper plane of tangency of the rollers 6. Then the beam is finally lowered to deposit the slab gently on the rollers.

The subsequent slab is picked up by the transfer unit, like the first one, but is rotated through 180° with respect to the preceding one, so that the suckers act on its lower face. While keeping the suckers in this position, at a level that is slightly raised with respect to the upper plane of tangency of the rollers 6, the beam 9 is moved and inserted laterally in the parking unit 2, placing its transverse arms in the intermediate spaces 18 provided between the rollers 6 of the unit 2 and sliding laterally in the lower space 19 of the frame 5 approximately up to the centerline M of the unit 2. Then the beam is lowered slightly to gently deposit the slab on the rollers 6, supporting the lower surface of the slab with the suckers 11. Of course, after this maneuver the upper surface of the slab lies opposite to the upper surface of the preceding slab, allowing processing on alternating faces, as required for "open-speckle" arrangement.

## Claims

1. Automatic device for handling slabs of marble, granite and other stone materials, comprising a parking unit (2) arranged at the inlet, respectively the outlet of a processing line for parking the slabs advancing along a longitudinal direction (F), an accumulation unit (3) arranged adjacent to said parking unit (2) for accumulating the slabs to be processed and, respectively, the already-processed slabs, a transfer unit (4) arranged between said parking unit (2) and said accumulating unit (3) for transferring the slabs therebetween, wherein said parking unit (2) has a frame (5) supporting a series of transverse rollers (6) or group or rollers which are mutually offset along said advancement direction (F) so as to form intermediate spaces (18) therebetween, and wherein said transfer unit (4) has grip means acting on the upper face, respectively the lower face of the slabs (L) to be transferred, said grip means including a beam (9) mounted for rotation about its longitudinal axis (A), a plurality of transverse arms (10) anchored to said longitudinal beam (9) in longitudinal offset position to be laterally inserted within the intermediate spaces (18) formed between the rollers (6) of said parking unit (2), and a plurality of suckers (11) fixed to said arms and connected to an external vacuum source for gripping said slabs (L), **characterized** in that said beam (9) is slidably mounted on substantially vertical guiding means (16) which are in turn slidably mounted on horizontal guiding means (14) fixed to the ground and extending between said parking unit (2) and said accumulation unit (3) transversly to the advancement direction of the slabs, said frame (5) having a longitudinal space (19) in the region below the rollers (6) suitable to receive said longitudinal beam (9) upon lateral sliding insertion of said beam (9) in and from said parking unit (2) with no interference with said frame (5) when gripping the slabs from below.

2. Device according to claim 1, wherein said rollers (6) or groups of rollers are mounted in a cantilever manner on said frame (5).

3. Device according to claim 2, wherein the longitudinal axis of said beam (9) is substantially horizontal and parallel to the centerline (M) of said processing line.

4. Device according to claim 3, wherein said beam (9) is supported at its opposed ends by two substantially vertical posts (12) mounted on tracks (13) slidable along said horizontal transverse guiding means (14).

5. Device according to claim 4, wherein said beam (9), said substantially vertical posts (12) and said tracks (13) define a portal-shaped supporting structure sliding along said transverse guiding means (14).

6. Device according to any preceding claims, wherein said transfer unit (4) comprises actuation devices acting on said beam (9) and said tracks (13) to promote horizontal and vertical translatory motion as well as rotation of the beam (9) about its horizontal axis (A).

7. Device according to claim 6, wherein said transfer unit further comprises sensor and/or stroke limiting devices which are connected to an electronic control unit (20) for controlling said actuation devices.

## Patentansprüche

1. Automatische Vorrichtung zur Handhabung von Platten aus Marmor, Granit und anderem Steinmaterial, die folgendes aufweist: eine Parkeinheit (2), die am Einlaß bzw. am entsprechenden Auslaß einer Fertigungslinie angeordnet ist, um die sich entlang einer Längsrichtung (F) bewegenden Platten zu parken, eine Sammeleinheit bzw. Akkumuliereinheit (3), die angrenzend zur erwähnten Parkeinheit (2) angeordnet ist, um die Platten anzusammeln, die verarbeitet werden sollen bzw. um bereits verarbeitete Platten anzusammeln, eine Transfereinheit (4), die zwischen der Parkeinheit (2) und der Akkumuliereinheit (3) zum Transferieren der Platten zwischen den beiden Einheiten angeordnet ist, wobei die Parkeinheit (2) einen Rahmen (5) hat, der eine Serie von sich quer erstreckenden Rollen (6) oder eine Gruppe von Rollen trägt, die wechselweise in Richtung der Vorwärtsbewegung (F) versetzt sind, so daß Zwischenräume (18) dazwischen ausgebildet werden, und wobei die Transfereinheit (4) Greifmittel hat, die auf die Oberseite bzw. die Unterseite der Platten (L) wirken, die transferiert werden sollen, wobei die Greifmittel folgendes aufweisen: einen Träger bzw. Tragebalken (9), der für eine Drehung um die Längsachse (A) angebracht ist, eine Vielzahl von sich quer erstreckenden Armen (10), die am zuvor erwähnten Längsträger (9) an in Längsrichtung versetzten Positionen verankert sind, um seitlich in die Zwischenräume (18) eingeführt zu werden, die zwischen den Rollen (6) der Parkeinheit (2) ausgebildet sind, und eine Vielzahl von Saugern bzw. Saugnäpfen (11), die an den Armen befestigt sind und mit einer externen Vakuumquelle zum Greifen der Platten (L) verbunden sind,
**gekennzeichnet dadurch,** daß der Träger (9) gleitbar auf im wesentlichen vertikalen Führungsmitteln (16) angebracht ist, die wiederum gleitbar auf horizontalen Führungsmitteln (14) angebracht sind, die am Boden befestigt sind und sich zwischen der Parkeinheit (2) und der Akkumuliereinheit (3) quer zur Richtung der Vorwärtsbewegung der Platten erstrecken, wobei der Rahmen (5) einen sich in Längsrichtung erstrekkenden Raum (19) im Gebiet unterhalb der Rollen (6) hat, der zur Aufnahme des sich in Längsrichtung erstreckenden Trägers (9) geeignet ist, und zwar nach einer seitlichen gleitenden Einführung des erwähnten Trägers (9) in und aus der Parkeinheit (2) heraus, wobei es zu keiner Interferenz bzw. gegenseitigen Beeinflussung mit dem Rahmen (5) kommt, wenn die Platten von unten gegriffen werden.

2. Anordnung gemäß Anspruch 1, wobei die Rollen (6) oder Gruppen aus Rollen in der Art und Weise eines Auslegers bzw. einseitig eingespannt am Rahmen (5) angebracht sind.

3. Vorrichtung gemäß Anspruch 2, wobei die Längsachse des Trägers (9) im wesentlichen horizontal und parallel zur Mittellinie (M) der Fertigungs- bzw. Verarbeitungslinie ist.

4. Vorrichtung gemäß Anspruch 3, wobei der Träger (9) an seinen gegenüberliegenden Enden durch zwei im wesentlichen vertikale Pfeiler bzw. Pfosten (12) getragen wird, die auf Schienen (13) gleitbar entlang der horizontalen, quer verlaufenden Führungsmittel (14) angebracht sind.

5. Vorrichtung gemäß Anspruch 4, wobei der Träger (9), die im wesentlichen vertikalen Pfeiler (12) und die Schienen (13) eine torförmige Tragestruktur definieren, die gleitbar entlang der quer verlaufenden Führungsmittel (14) ist.

6. Vorrichtung gemäß einem der vorangegangenen Ansprüche, wobei die Transfereinheit (4) Betätigungsvorrichtungen aufweist, die auf den Träger (9) und die Schienen (13) wirken, um eine horizontale und vertikale Translationsbewegung sowie eine Drehung des Trägers (9) um seine horizontale Achse (A) zu unterstreichen bzw. voranzutreiben.

7. Vorrichtung gemäß Anspruch 6, wobei die Transfereinheit weiter einen Sensor und/oder Hubbegrenzungsvorrichtungen aufweist, die mit einer elektronischen Steuereinheit (20) zur Steuerung der Betätigungsvorrichtungen verbunden sind.

## Revendications

1. Dispositif automatique pour manipuler des plaques de marbre, de granit ou autre pierre, comprenant un poste de dépose (2) disposé à l' entrée, respectivement la sortie, d'une ligne de traitement pour déposer les tranches avançant selon une direction longitudinale (F), un poste de stockage disposé au voisinage du poste de dépose (2) pour stocker les tranches à traiter et, respectivement, les tranches déjà traitées, un module de transfert (4) disposé entre le poste de dépose (2) et le poste de stockage (3) pour transférer les tranches entrez eux, dans lequel Le poste de dépose (2) comprend un châssis (5) portant une succession de rouleaux transverses (6) ou groupe de rouleaux qui sont décalés les uns par rapport aux autres dans la direction d'avancement (F) de façon à former des espaces intermédiaires (18) entre eux, et dans lequel le module de transfert (4) comprend des moyens d'agrippement agissant sur la face supé-rieure, respectivement la face inférieure, des tranches (L) à transférer, les moyens d' agrippement comprenant une poutre (9) montée pour tourner autour de son axe longitudinal (A), une pluralité de bras transverses (10) accrochés à la poutre longitudinale (9) à des positions longitudinalement décalées pour être insérés latéralement dans les espaces intermédiaires (18) formés entre les rouleaux (6) du poste de dépose (2) et une pluralité de ventouses (11) fixées aux bras et reliées à une source de dépression externe pour agripper les tranches (L), caractérisé en ce que la poutre (9) est montée à coulissement sur un moyen de guidage sensiblement vertical (16) qui est lui-même monté à coulissement sur un moyen de guidage horizontal (14) fixé au sol et s'étendant entre le poste de dépose (2) et le poste de stockage (3) transversalement à la direction d'avancement des tranches, le cadre (5) comportant un espace longitudinal (19) dans la region située en-dessous des rouleaux (6) adaptés à recevoir la poutre longitudinale (9) par suite de l'insertion à coulissement latéral de la poutre (9) dans et à partir du poste de dépose (2) sans interférences avec le cadre (5) quand on agrippe les plaques à partir du dessous.

2. Dispositif selon la revendication 1, dans lequel les rouleaux (6) ou groupes de rouleaux sont montés en porte-à-faux sur le cadre (5).

3. Dispositif selon la revendication 2, dans lequel l'axe longitudinal de la poutre (9) est sensiblement horizontal et parallèle à la ligne centrale (M) de la ligne de traitement.

4. Dispositif selon la revendication 3, dans lequel la poutre (9) est portée à ses extrémités opposées par deux potences sensiblement verticales (12) montées sur des pistes (13) coulissant le long du moyen de guidage transverse horizontal (14).

5. Dispositif selon la revendication 4, dans lequel la poutre (9), les potences sensiblement verticales (12) et les pistes (13) définissent une structure support en forme de portique glissant le long du moyen de guidage transverse (14).

6. Dispositif selon l'une quelconque des revendications précédentes, dans lequel le module de transfert (4) comprend des dispositifs d'actionnement agissant sur la poutre (9) et les pistes (13) pour aider à un déplacement en translation horizontale et verticale ainsi qu'en rotation de la poutre (9) autour de son axe horizontal (A).

7. Dispositif selon la revendication 6, dans lequel le module de transfert comprend en outre un détecteur et/ou des dispositifs de limitation de course qui sont reliés à un module de commande électronique (20) pour commander les dispositifs d'actionnement.
